# EUROPEAN PATENT APPLICATION

(11) **EP 1 278 357 A1**
(43) Date of publication of application: **22.01.2003**
(21) Application number: 01116537.0
(22) Date of filing: 09.07.2001
(51) Int. Cl.: H04M 1/725, H04Q 7/32, H04L 29/06

(54) **Method for dynamic channel occupation management**

(71) Applicant: Swissvoice AG, 4500 Solothurn (CH)
(72) Inventor: Baev, Stoyan, 4500 Solothurn (CH)
(74) Representative: Rutz, Peter

(57) **Abstract**

The invention relates to a method for dynamic channel occupation management for multiple in-parallel call operation for wireless communication systems. To increase the data rate capacity, in a first communication mode all communication channels of a first terminal may be used, while in second communication mode at least one channel of the at least one first terminal is kept free respectively made free when occupied to allow for establishment of a new communication link with another terminal and/or bearer handover.

## Description

The present invention relates to a method for dynamic channel occupation management and to terminals for carrying out this method according to claim 1, 8 respectively 11.

More particularly, the present invention relates to a method for cordless communication between terminals using as telecommunication protocol the Digital Enhanced Cordless Telecommunications (DECT) technology as standardised by the European Telecommunications Standardisation Institute (ETSI), or any DECT derivative, e.g. Personal Wireless Telecommunications (PWT) which has been standardised within the North America Telecommunications Industry Association (TIA). Other cordless technologies using a dynamic channel selection may be applicable as well.

The Digital Enhanced Cordless Telecommunication (DECT) is described in a number of related standards developed by the European Telecommunications Standards Institute (ETSI). The multipart EN 300 175 DECT Common Interface (CI) standard specifies the DECT basic Physical and Protocol requirements. A number of other standards describe particular DECT applications and are commonly known as DECT Profiles.

One such Profile is the EN 301 649 DECT DPRS (Data Packet Radio Service) standard. The DPRS profile specifies how the DECT technology may be applied to provide wireless transport mechanism for transmission of data packets. Those packets may be Protocol Data Units (PDUs) of different data protocols, e.g. Ethernet, Token Ring, PPP, IP, or, may be constructed out of the bit-streams transmitted by data protocols such as V.24. Another example is the EN 300 444 DECT Generic Access Profile (GAP) which specifies the basic DECT requirements for circuit switched voice and mobility management.

The DECT technology is a generic cordless access technology. Consequently the DECT protocol specifies how a number of DECT terminals can be intra connected within a local DECT wireless network, and how this Local DECT network can be inter connected to an external network to access the services offered by this external network.

A local DECT network comprises at least one base station and one or more mobile terminals. In DECT terminology, the base station is as well designated as Fixed Part or DECT Fixed Part (FP), which contains the logical elements of at least one Fixed radio Termination (FT). A FT is a logical group of functions that contains the DECT processes and procedures on the fixed side of the DECT air interface. A mobile terminal is as well designated as Portable Part or DECT Portable Part (PP), which contains the logical elements of at least one Portable radio Termination (PT). A PT is a logical group of functions that contains the DECT processes and procedures on the portable side of the DECT air interface.

As specified in EN 300 175-2 - DECT CI Physical layer, a single DECT radio operates in a particular spectrum domain, which for example in Europe is set from 1880 MHz until 1900 MHz. In other parts of the world the spectrum allocated for DECT operation may differ. The allocated spectrum is equally divided in frequency carriers. In the case of Europe there are 10 equally spaced frequency carriers. On every carrier DECT utilises the Time Division (TD) technique according to which the transmission is divided into frames, which according to DECT have a duration of 10 ms. Within every frame sub-intervals called slots of duration of 10/24 ms are formed. Consequently, one DECT frame consists of 24 slots which are numbered from 0 to 23.

Every DECT connection oriented service (e.g. voice or data) utilises one or a number of paired slots equally spaced in time by a time interval corresponding to 12 slots. Each pair is transmitted on one of the available carriers. These pairs are normally called "duplex" or "double simplex" bearers. As specified in EN 300 444 a DECT voice call uses one duplex bearer, i.e. one pair of slots. As specified in EN 301 649 a DECT data call may use up to 12 duplex respectively 11 double simplex bearers. The connections may be of voice type, or permit data exchanges occupying the equivalent of one or more voice channels.

Assuming that one communication channel is using only one pair of slots it is often said in the DECT standards that per radio unit 120 communication channels are possible (10 carriers with 12 channels each). One DECT radio unit with a conventional antenna however, normally cannot transmit/receive on the same time slot on different carriers. Therefore, one DECT radio with conventional antenna has only 12 usable channels.

To establish a communication a terminal needs to find a free channel, i.e. at least one pair of slots that is not used by any of the radios that are involved in the communication. As a consequence, if a FT supports multiple in-parallel calls, it always needs to keep at least one pair of slots respectively one channel free in order to allow the establishment of a new communication link. This reduces the number of usable channels from 12 to 11. The data rate capacity of that system is reduced by at least 48 kbps at application level if the system uses the two level modulation scheme as defined in EN 300 175-2 and multiple sub-fields B-field as defined in EN 300 175-3. If the system is using other possible modulation scheme and B-field structure as defined again in the EN 300 175, the reduction in data rate will be much higher.

It is therefore an object of the present invention to provide a method of communication which allows for the transmission of higher data rates even when multiple in-parallel calls are supported.

This object is achieved by a method according to claim 1 and terminals with the features of claims 8 and 11. Preferred embodiments are described in the dependent claims and the description.

The invention specifies a method for dynamic channels occupation management for multiple in-parallel call operation for wireless systems. According to the invention, a first terminal capable of performing more than one in-parallel call uses two different communication modes for the wireless exchange of use data, e.g. voice or other data, with at least one other terminal in a local network. In the first communication mode all communication channels of the first terminal respectively the full bandwidth may be used for data transfer. The data rate capacity is thus increased. Unlike in standard communication methods, e.g. according to DECT, no channel is kept free to allow for establishment of a new communication link with another terminal and/or bearer handover. It is accepted that for a certain period of time all requests from other terminals might be denied. Options like establishment of new links are available in the second communication mode. The second communication mode generally corresponds to the standard communication mode of DECT or related systems. When in the second communication mode, at least one channel of the at least one first terminal is kept free respectively freed when occupied in such a way that the first terminal may accept another incoming call or handle bearer handover.

The method is especially suited for communication systems using the DECT (Digital Enhanced Cordless Telecommunication) technology for cordless communication or a related technology. The inventive method is especially advantageous for the transmission of data packets, i.e. a certain amount of data that needs to be transmitted during a limited period of time followed by a period of no transmission.

Keeping a channel free in the context of the invention means that a FT does not initiate bearer establishment or rejects a PT initiated bearer establishment on that channel when the bearer, which establishment was requested, represents an additional bearer of an already established connection. Forcing a channel free means that the FT initiates bearer release and consequently releases the bearer on this channel.

Preferably the communication mode is periodically switched from the first communication mode to the second communication mode after the expiration of a first time interval respectively timer T_{A} and from the second communication mode to the first communication mode after the expiration of a second time interval respectively timer T_{I}. During the first time intervals, the first terminal may use all time slots for data transmission, thus achieving an increased overall data rate capacity. At least during the second time intervals another terminal may establish a connection with the first terminal. The first terminal does not need to switch into the second communication mode if the communication system is configured such that there is only one call at a time, e.g. if the system comprises the first terminal and only one other terminal. When the system configuration changes, the switching between the first and second mode can be activated.

Preferably the first respectively second time interval is several times longer than the length of one multiframe, e.g. 20 times longer, such that a number of subsequent time frames can be fully occupied. The lengths of the time intervals are predetermined, e.g. by the user, or allocated by one of the terminals. The terminals comprise storage means for storing the respective values. Preferably, the respective values are negotiated between at least two terminals, e.g. during subscription of a new terminal.

The inventive "first" terminal, i.e. the terminal capable of performing more than one in-parallel call in a local network, comprises controlling means which allow that all communication channels of this terminal are used for data transfer in the first communication mode. Further, the controlling means keep respectively make at least one channel free in the second communication mode and control the switching between the first and second communication mode.

The "other" terminal, i.e. the terminal communicating with a first terminal, is preferably, but not necessarily adapted to the two communication modes by comprising storage means for the two interval lengths, means to determine whether the first terminal is in the first or the second communication mode and controlling means which repeat a denied request for connection, which has been sent during a first time interval, after expiration of the first time interval, i.e. in a second time interval. All terminals of the local network are synchronised with regard to the first and second communication modes respectively time intervals.

### Brief description of the drawings:

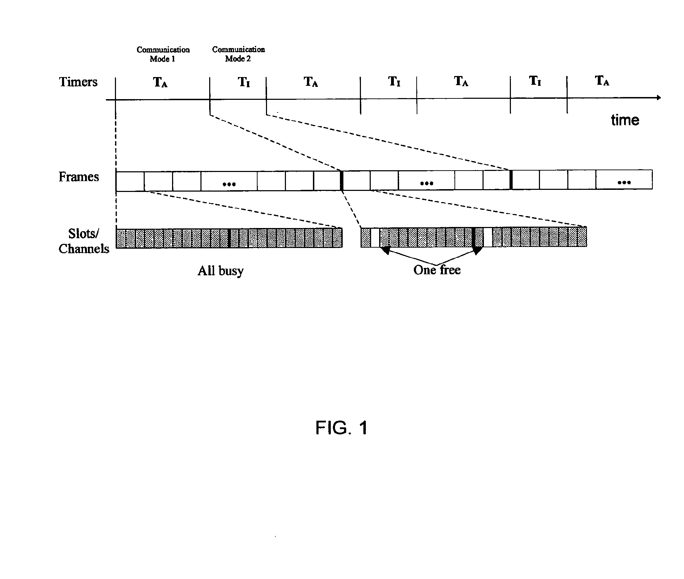

Fig. 1 shows schematically the two communication modes as a function of time.

During the first time intervals T_{A} all slots respectively channels may be occupied. During the second time intervals T_{I} at least one channel respectively pair of slots is kept free. The first and second time intervals are alternating.

To perform the dynamic channel occupation management operation the FT keeps track of how many channels are in use per frame and per active call. During the time period T_{A} the FT may allow use of as many channels per active call as needed to provide as high as possible data throughput. How many channels are needed per every particular call depends on the service provided by this call, the demands for data transmission at the moment or user preferences settings.

When the timer T_{A} expires the FT checks how many channels are in use at this moment. If all 12 channels are in use the FT releases one bearer and frees one channel. The FT preferably releases a bearer from a multi-bearer connection (call) other than the pilot bearer, thereby the maximum data rate of this connection will be reduced. If there are no multi-bearer connections or it is impossible to release a bearer from such a connection, the FT tries to suspend data connection, preferably a single bearer one. Release of an existing voice call may be allowed only if the user has set such preferences. If the FT is not able to free a channel, the FT should still start timer T_{I} and follow the sequence of switching between the two communication modes.

When a channel is freed it may still happen that a PT having an active call tries to establish an additional bearer. Before accepting this request, the FT preferably checks the PMID of the initiator and rejects requests from PTs that are already engaged in a call. Request for bearer from a PT in suspended mode is preferably accepted. As soon as the freed channel becomes occupied the FT preferably switches off timer T_{I} and starts timer T_{A}.

The following example describes how the inventive method may be implemented into the DECT protocol.

To dynamically manage the channels occupation when supporting more than one in-parallel calls a wireless terminal, e.g. a DECT FT (Fixed Termination) is given the right to choose and communicate to all terminals of the local DECT network, i.e. all potential communication partners, specific values for two timers. These timers correspond to the lengths of the first respectively second time interval T_{A} and T_{I}. The side receiving the suggested values, e.g. a DECT PT, can decide to negotiate and suggest different values for T_{A} and T_{I}. The values suggested by the terminal that supports more than one in-parallel calls should have higher priority.

After the values have been assigned, the first terminal, i.e. the terminal that supports multiple in-parallel calls, e.g. a DECT FT, can utilise in the first communication mode all channels at least for a time period that equals T_{A}. If the FT has knowledge that a second in-parallel call may be requested from another terminal, i.e. the FT has more than one PT subscribed, the FT switches into the second communication mode after the expiration of the first time interval. It keeps at least one channel unoccupied for a time period that equals T_{I}. If the FT has knowledge that no more than one call at a time is possible then the FT may remain in the first communication mode and utilise all channels for as long as it is needed.

In both communication modes a further terminal can request connection with the first terminal. If the connection set-up fails during the first interval, the initiating terminal preferably waits until its timer T_{A} expires and tries a new set-up during the next T_{I} period when the FT is expected to have freed at least one channel. During times when connection is not possible, the user is preferably notified about the time remaining until an in-parallel call set-up attempt will be possible.

An example of channel occupation management is given in table 1. The carriers used for every particular slot pair are randomly chosen. During the duration of the call the whole bandwidth is used for data transmission for 5 seconds (i.e. T_{A} = 5 seconds) followed by an interval of 3 seconds (i.e. T_{I} = 3 seconds) when one channel is freed to allow a second in-parallel call to be initiated.

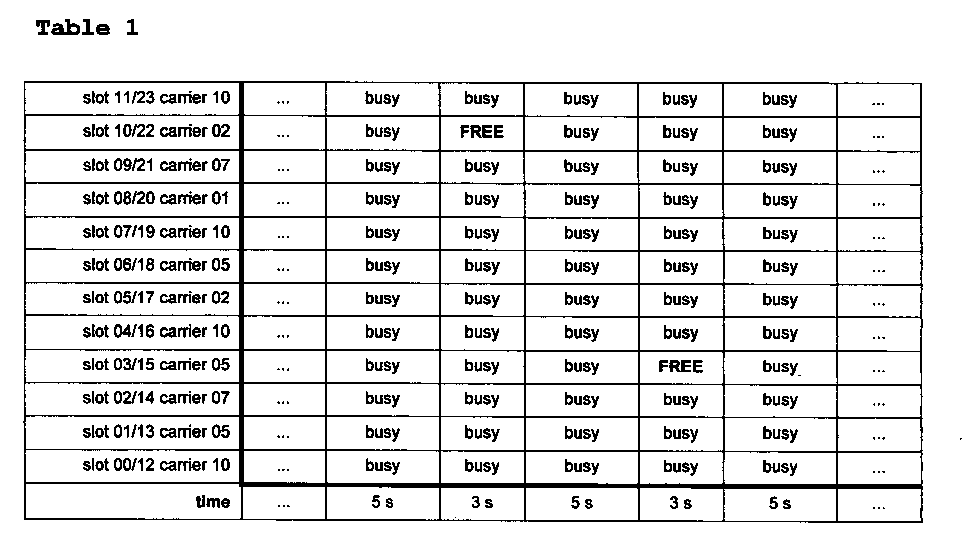

The dynamic channel occupation procedure may be used as well when more than one call has been established and a number of those calls has been suspended. A resumption of a call follows the rules for initial call establishment as highlighted above. If a procedure for regular announcement that a terminal is in suspended mode is used (e.g. the DECT Stay alive procedure as specified in EN 301 649), the values of the timers used for the dynamic channel occupation management and the values of the timers used in the Stay alive procedure should be properly chosen. For example, if a terminal in suspended mode is required to announce its presence at least every 5 seconds, the timer T_{A} should be given a value lower than 5 seconds. Thereby a free channel is available for a sufficient period of time to receive the announcement.

The values for the timers T_{A} and T_{I} are preferably assigned during the time a terminal becomes known to the system, e.g. during DECT subscription, and can be changed later if necessary. Values may be assigned automatically based on a predefined algorithm or manually based on any user chosen priority.

The EN 301 649 clause 12.8 specifies that for assigning the values of timers related to the Stay alive procedure during periods of suspension, the «Setup capability» information element as specified in EN 300 175-5 clause 7.7.40 should be used. Preferably the same information element is extended to allow assignment of the T_{A} and T_{I} values as shown in table 2f (the new fields and text compared to the current standard are indicated in *italics*).

**Table 2**

| Bit: | 8 | 7 | 6 | 5 | 4 | 3 | 2 | 1 | Octet: |
|---|---|---|---|---|---|---|---|---|---|
| | 0 | «SETUP CAPABILIY» | | | | | | | 1 |
| | Length of Contents (L) | | | | | | | | 2 |
| | 1 | 0 | 0 | 1 | Setup | | Page | | 3 |
| | 0/1 | Service settings_1 | | | | | | | 4 |
| | 0/1 | ... | | | | | | | |
| | 1 | Service settings_n | | | | | | | 4n-1 |
| | 0/1 | Parameters settings_1 | | | | | | | 5 |
| | T903 | | | | | | | | 5a |
| | T904 | | | | | | | | 5b |
| | T905 | | | | | | | | 5c |
| | T909 | | | | | | | | 5d |
| | T910 | | | | | | | | 5e |
| | Bearers number | | | | | | | | 5f |
| | *0*/*1* | *Parameters settings_2* | | | | | | | *6* |
| | *T*_{*A*} | | | | | | | | *6a* |
| | *T*_{*I*} | | | | | | | | *6b* |

Preferably, the first terminal assists the terminals seeking for a free channel by indicating the number of channel that is to be freed in the next second interval. In the case of DECT the FT indicates which channel is to be freed for example by using the coding "Recommended other bearer" of the MAC layer information included in a PT type MAC message as specified in EN 300 175-3.

The values for the timers T_{A}, T_{I} are preferably chosen depending on the capabilities supported by the FT and PT, as well as the services provided. When the suspend procedure, which is defined in the EN 301 649, is supported, FT and PT are allocated a value for the timer T910. This timer determines the time within which a successful handshake (stay-alive) procedure should have taken place or otherwise the call is released. In order to maintain a suspended call a free channel should be available beforehand. In such a situation the value chosen for the timer T_{A} shall be related to the value chosen for the T910 and the time needed for a successful bearer setup for the stay-alive procedure. The following formula should be used: *T*_{*A*} *< (T910 - T200).* The timer T910 is defined in EN 301 649 whereas timer T200 is defined in EN 300 175-3.

The minimum value of T_{A} = 20 multi-frames is suggested (3.2 sec).

T_{I} should be chosen at least with regard to the time needed for the completion of a connection setup to succeed, i.e. more than 3 seconds. The connection setup is guarded by the T200 timer defined in EN 3900 175-3 and having a value of 3 sec. The minimum value of T_{I} = 20 multi-frames is suggested (3.2 sec).

## Claims

1. A method for dynamic channel occupation management for multiple in-parallel call operation for wireless communication systems, wherein use data can be transmitted via a number of communication channels of a time frame, wherein in a first communication mode all communication channels of at least one first terminal capable of performing more than one in-parallel call may be used, in a second communication mode at least one channel of the at least one first terminal is kept free respectively made free when occupied to allow for establishment of a new communication link with another terminal and/or bearer handover, and wherein the communication mode is switched between the first and second communication mode.

2. Method according to claim 1, wherein the communication mode is switched from the first communication mode to the second communication mode after the expiration of a first time interval (T_{A}) and from the second communication mode to the first communication mode after the expiration of a second time interval (T_{I}).

3. Method according to claim 1 or 2, wherein the at least one first terminal uses the first communication mode except when the network configuration is such that more than one call at a time may be requested by at least one other terminal.

4. Method according to one of claims 2-3, wherein the length of the first and the second time interval is predetermined.

5. Method according to one of claims 2-3, wherein the length of the first and the second time interval is allocated by at least one terminal of the local network, preferably by the first terminal.

6. Method according to claim 5, wherein the length of the first and the second time interval is negotiated between at least two terminals, wherein preferably the value suggested by the at least one first terminal has higher priority.

7. Method according to one of claims 2-6, wherein a terminal requesting a connection from the at least one first terminal repeats its request after expiration of the first time interval, if the request has been denied.

8. A terminal capable of performing more than one in-parallel call for carrying out the method according to one of the preceding claims, comprising controlling means which allow for all communication channels of the first terminal being used in the first communication mode, which keep respectively make at least one channel free in the second communication mode, and which perform switching between the first and second communication mode.

9. Terminal according to claim 8, further comprising storage means for storage of at least two timer values corresponding to the lengths of a first respectively second time interval, during which the first respectively second communication mode is used.

10. Terminal according to claim 8 or 9, further comprising timer means for determining the instants for switching between the communication modes.

11. A Terminal for communicating with a terminal capable of performing more than one in-parallel call using the method according to one of claims 1 to 7, comprising storage means for storage of at least two timer values corresponding to the lengths of a first respectively second time interval, during which the first respectively second communication mode is used.

12. Terminal according to claim 11, further comprising timer means for determining whether the first terminal is in the first or second communication mode.

13. Terminal according to claim 11 or 12, further comprising controlling means which repeat a denied request for connection in a second time interval.
